(19) Europäisches Patentamt
European Patent Office
Office européen des brevets

(11) EP 2 336 211 A1

(12) EUROPÄISCHE PATENTANMELDUNG

(43) Veröffentlichungstag:
**22.06.2011 Patentblatt 2011/25**

(21) Anmeldenummer: **09015400.6**

(22) Anmeldetag: **12.12.2009**

(51) Int Cl.:
***C08G 18/10*** *(2006.01)* ***C08G 18/28*** *(2006.01)*
***C08J 9/00*** *(2006.01)* ***C08K 5/09*** *(2006.01)*
***C08K 5/098*** *(2006.01)*

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Bayer MaterialScience AG**
**51368 Leverkusen (DE)**

(72) Erfinder:
- **Dörr, Sebastian, Dr.**
  **40597 Düsseldorf (DE)**
- **Niesten, Meike, Dr.**
  **51061 Köln (DE)**
- **Schönberger, Jan, Dr.**
  **42781 Haan (DE)**

# (54) Hydrophile, aliphatische Polyurethan-Schäume

(57) Die Erfindung betrifft ein Verfahren zur Herstellung von hydrophilen, aliphatischen Polyurethan-Schäumen. Weitere Gegenstände der Erfindung sind spezielle Zusammensetzungen zur Herstellung der Polyurethan-Schäume, nach dem erfindungsgemäßen Verfahren oder aus den erfindungsgemäßen Zusammensetzungen erhältliche Polyurethanschäume, sowie die Verwendung der Polyurethanschäume als Wundauflage, kosmetischer Artikel oder Inkontinenzprodukt.

EP 2 336 211 A1

## Beschreibung

Die Erfindung betrifft ein Verfahren zur Herstellung von hydrophilen, aliphatischen Polyurethan-Schäumen. Weitere Gegenstände der Erfindung sind spezielle Zusammensetzungen zur Herstellung der Polyurethan-Schäume, nach dem erfindungsgemäßen Verfahren oder aus den erfindungsgemäßen Zusammensetzungen erhältliche Polyurethanschäume, sowie die Verwendung der Polyurethanschäume als Wundauflage, kosmetischer Artikel oder Inkontinenzprodukt.

Verfahren zur Herstellung von hydrophilen, aliphatischen Polyurethan-Schäumen bzw. die Verwendung derartiger Schäume als Wundauflagen sind im Stand der Technik offenbart.

Die EP-A 949285 beschreibt die Reaktion von Polyisocyanaten mit primären Diaminen, niedermolekularen Polyolen und hochmolekularen Polyolen. Bei dieser Reaktion ist nicht auszuschließen, dass erhebliche Teile der isocyanatreaktiven Substanzen nicht umgesetzt werden und anschließend aus dem hydrophilen Schaum extrahierbar sind.

Die GB 1 571 730 beschreibt die Reaktion von Diisocyanaten mit hohem Dampfdruck wie Isophorondiisocyanat (IPDI) und Bis(isocyanatocyclohexyl)methan (HMDI) mit Polyolen. Auch hier bleiben nicht umgesetzte Komponenten zurück. Ferner ist das Arbeiten mit freien, nicht derivatisierten Diisocyanaten aus Sicht der Arbeitshygiene problematisch. In der WO 2004013215 werden ebenfalls leicht flüchtige Diisocyanate umgesetzt.

In der GB 1 571 730 wie auch in der US 3,778,390, US 3,799,898 und FR 2 077 388 werden als Schaumstabilisatoren siliziumhaltige und siliziumfreie nichtionische, Sulfat-, Phosphat- und Sulfonat-Emulgatoren genannt. Diese weisen jedoch eine geringe Zellverträglichkeit auf. Die Verwendung von Carboxylaten wird nicht erwähnt.

Die WO 2003/097727, US 5,065,752 und US 5,064,653 beschreiben die Schaumbildungsreaktion von Präpolymeren in Gegenwart von Acrylamid-Acrylsäure-Copolymeren. Diese Produkte sind chemisch nicht angekoppelt und können komplett extrahiert werden, was ebenfalls nicht wünschenswert ist.

In der US 3,903,232 werden Präpolymere mit Polyethern umgesetzt. Auch hier besteht die Gefahr des Auftretens nicht angekoppelter Polyole. Die US 5,296,518 beschreibt ebenso die Umsetzung von Präpolymeren mit Polyethern, wobei drei unterschiedliche Polyole eingesetzt werden, was die Wirtschaftlichkeit dieses Verfahrens in Frage stellt. Zudem lässt sich mit dem dort beschriebenen Verfahren nicht sicherstellen, dass keine niedermolekularen Isocyanate im Gemisch verbleiben, was nicht wünschenswert ist. Die Verwendung von Carboxylaten wird nicht erwähnt. Die Herstellung der Präpolymere erfordert zumeist unwirtschaftlich lange Reaktionszeiten.

In der bisher nicht veröffentlichten PCT-Anmeldung mit der Anmeldenummer PCT/EP2009/004610 ist ebenfalls ein Verfahren zur Herstellung von Polyurethanschäumen sowie die Verwendung derartiger Schäume als Wundauflagen beschrieben.

Aufgabe der vorliegenden Erfindung war daher die Bereitstellung eines Verfahrens zur Herstellung hydrophiler, aliphatischer Polyurethan-Schäume, welche insbesondere als Bestandteil einer Wundauflage, eines kosmetischen Artikels oder eines Inkontinenzprodukts eingesetzt werden können, und daher nur wenig extrahierbare Bestandteile aufweisen sollen. Zudem ist es von großer prozesstechnischer Wichtigkeit, dass die Polyurethan-Schäume nach dem Aufschäumen keinen Volumenschrumpf erleiden. Überdies sollen bei deren Herstellung nur Polyisocyanate mit einem niedrigen Dampfdruck, also keine unmodifizierten Diisocyanate, eingesetzt werden. Die hydrophilen, aliphatischen Polyurethan-Schäume sollen überdies eine rasche und hohe Absorption von physiologischer Salzlösung bzw. von Wundflüssigkeit aufweisen, ohne dass hierzu zwingend superabsorbierende Polymere eingesetzt werden müssen. Wundauflagen aus diesen Polyurethan-Schäumen sollen zellverträglich sein (nicht cytotoxisch) und sich in der Anwendung der Wundform optimal anpassen.

Diese Aufgabe wird erfindungsgemäß durch ein Verfahren zur Herstellung hydrophiler, aliphatischer Polyurethan-Schäume, bei dem Zusammensetzungen umfassend

A) isocyanatfunktionelle Präpolymere mit einem Gewichtsanteil an niedermolekularen, aliphatischen Diisocyanaten mit einer Molmasse von 140 bis 278 g/mol von unter 1,0 Gew.-%, bezogen auf das Präpolymer, erhältlich durch Umsetzung von

A1) niedermolekularen, aliphatischen Diisocyanaten einer Molmasse von 140 bis 278 g/mol mit

A2) di- bis hexafunktionellen Polyalkylenoxiden einer OH-Zahl von 22,5 bis 112 mg KOH/g, und einem Ethylenoxidanteil von 50 bis 100 mol%, bezogen auf die Gesamtmenge der enthaltenen Oxyalkylengruppen,

B) heterocyclische, 4-Ring- oder 6-Ring-Oligomere von niedermolekularen, aliphatischen Diisocyanaten mit einer Molmasse von 140 bis 278 g/mol,

C) Wasser,

D) gegebenenfalls Katalysatoren,

E) $C_8$- bis $C_{22}$-Monocarbonsäuren oder deren Ammonium- oder Alkalisalze oder $C_{12}$- bis $C_{44}$-Dicarbonsäuren oder deren Ammonium- oder Alkalisalze,

F) gegebenenfalls Tenside

G) gegebenenfalls ein- oder mehrwertige Alkohole und

H) gegebenenfalls hydrophile Polyisocyanate erhältlich durch Umsetzung von
H1) niedermolekularen, aliphatischen Diisocyanaten einer Molmasse von 140 bis 278 g/mol und / oder daraus herstellbaren Polyisocyanaten mit einer Isocyanatfunktionalität von 2 bis 6 mit
H2) monofunktionellen Polyalkylenoxiden einer OH-Zahl von 10 bis 250, und einem Ethylenoxidanteil von 50 bis 100 mol%, bezogen auf die Gesamtmenge der enthaltenen Oxyalkylengruppen bereitgestellt, aufgeschäumt und ausgehärtet werden,
dadurch gekennzeichnet, dass die Komponenten A) bis H) in folgenden Mengen eingesetzt werden:

A) 100 Gewichtsteile isocyanatfunktionelle r Präpolymere

B) > 30 bis 100 Gewichtsteile heterocyclischer Oligomere

C) 0,1 bis 200 Gewichtsteile Wasser

D) 0 bis 1 Gewichtsteile Katalysatoren

E) 0,01 bis 5 Gewichtsteile $C_8$- bis $C_{12}$-Monocarbonsäuren oder deren Ammonium- oder Alkalisalze oder $C_{12}$- bis $C_{44}$-Dicarbonsäuren oder deren Ammonium- oder Alkalisalze

F) 0 bis 10 Gewichtsteile Tenside

G) 0 bis 20 Gewichtsteile Alkohole

H) 0 bis 60 Gewichtsteile hydrophile Polyisocyanate.

Die nach dem erfindungsgemäßen Verfahren hergestellten Polyurethan-Schäume weisen eine geringe Rohdichte auf und können gleichzeitig eine große Menge einerphysiologischer Salzlösung bzw. einer Wundflüssigkeit schnell aufnehmen, wobei nur eine geringe Volumenzunahme erfolgt. Diesbezüglich übertreffen diese Schäume die aus der nicht veröffentlichten PCT-Anmeldung mit der Anmeldenummer PCT/EP2009/004610 bekannten Schäume noch einmal deutlich.

Das Absorptionsvermögen gegenüber physiologischer Salzlösung beträgt bei den nach dem erfindungsgemäßen Verfahren hergestellten Polyurethan-Schäumen typischerweise 400 bis 2000 % (Masse der aufgenommenen Flüssigkeit bezogen auf die Masse des trockenen Schaums; Bestimmung nach DIN EN 13726-1, Teil 3.2). Im Vergleich zu anderen hydrophilen Schäumen kann daher mit den Polyurethan-Schäumen auch ohne die Verwendung von superabsorbierenden Polymeren eine sehr hohe Absorption von physiologischer Salzlösung erreicht werden. Selbstverständlich ist die Einarbeitung von Superabsorbern aber auch bei den nach dem erfindungsgemäßen Verfahren hergestellten Polyurethan-Schäumen möglich, dies ist jedoch bei diesen Schäumen nicht bevorzugt, da sie bereits eine sehr hohe Absorption aufweisen.

Die nach dem erfindungsgemäßen Verfahren hergestellten Polyurethan-Schäume weisen darüber hinaus eine angenehme Haptik auf und sie besitzen eine poröse, zumindest teilweise offenzellige Struktur mit miteinander kommunizierenden Zellen auf. Die Rohdichte der Polyurethan-Schäume liegt dabei typischerweise bei 0,01 bis 0,5 $g/cm^3$ (Bestimmung nach DIN 53420). Darüber hinaus weisen die Polyurethan-Schäume eine gute mechanische Festigkeit und hohe Elastizität auf. Typischerweise sind die Werte für die Zugfestigkeit größer als 30 kPa und für die Bruchdehnung grö-βer als 20 % (Bestimmung nach DIN 53504, DIN 53455,).

Gemäß einer ersten bevorzugten Ausführungsforin der Erfindung ist vorgesehen, dass 35 bis 100, bevorzugt 40 bis 90, weiter bevorzugt 45 bis 80, besonders bevorzugt 50 bis 80 und ganz besonders bevorzugt 50 bis 70 Gewichtsteile heterocyclische Oligomere B) eingesetzt werden.

Weiter bevorzugt weisen die Präpolymere A) einen Restmonomergehalt von unter 0,5 Gew.-%, bezogen auf das Präpolymer auf. Dieser Gehalt kann durch entsprechend gewählte Einsatzmengen von Diisocyanaten A1) und Polyalkylenoxiden A2) realisiert werden. Bevorzugt ist jedoch der Einsatz des Diisocyanaten A1) im Überschuss bei anschließender, bevorzugt destillativer, Abtrennung nicht umgesetzter Diisocyanate.

Die Herstellung der isocyanatfunktionellen Präpolymere A) erfolgt typischerweise durch Umsetzung von 1 Val der Polyalkylenoxide A2) mit 1 bis 20 Mol, bevorzugt 1 bis 10 Mol, besonders bevorzugt 5 bis 10 Mol, des Diisocyanats A1).

Die Umsetzung kann in Gegenwart von Urethanisierungskatalysatoren wie Zinnverbindungen, Zinkverbindungen, Aminen, Guanidinen oder Amidinen, oder in Gegenwart von Allophanatisierungskatalysatoren wie Zinkverbindungen erfolgen.

Die Umsetzung erfolgt typischerweise bei 25 bis 140°C, bevorzugt 60 bis 100°C.

Wurde mit überschüssigem Diisocyanat gearbeitet, so erfolgt anschließend die Entfernung des Überschusses bevorzugt durch Dünnschichtdestillation.

Vor, während und nach der Reaktion oder destillativen Abtrennung des Düsocyanatüberschusses können saure oder alkylierende Stabilisatoren, wie Benzoylchlorid, Isophthaloylchlorid, Methyltosylat, Chlorpropionsäure, HCl oder Antioxidantien, wie Di-*tert*-butylkresol oder Tocopherol zugesetzt werden.

Der Gehalt Isocyanatgruppen (bestimmt nach DIN-EN ISO 11909) der isocyanatfunktionellen Präpolymere A) beträgt bevorzugt 1,5 bis 4,5 Gew.-%, besonders bevorzugt 1,5 bis 3,5 Gew.-% und ganz besonders bevorzugt 1,5 bis 3,0 Gew.-%.

Beispiele für niedermolekulare, aliphatischen Diisocyanate A1) sind Hexamethylendiisocyanat (HDI), Isophorondiisocyanat (IPDI), Butylendiisocyanat (BDI), Bisisocyanatocyclohexylmethan (HMDI), 2,2,4-Trimethylhexamethylendiisocyanat, Bisisocyanatomethylcyclohexan, Bisisocyanatomethyltricyclodecan, Xylendiisocyanat, Tetramethylxylylendiisocyanat Norbomandiisocyanat, Cyclohexandiisocyanat oder Diisocyanatododecan, wobei Hexamethylendiisocyanat (HDI), Isophorondiisocyanat (IPDI), Butylendiisocyanat (BDI) und Bis(isocyanatocyclohexyl)methan (HMDI) bevorzugt sind. Besonders bevorzugt sind BDI, HDI, IPDI, ganz besonders bevorzugt Hexamethylendiisocyanat und Isophorondiisocyanat.

Polyalkylenoxide A2) sind bevorzugt Copolymere aus Ethylenoxid und Propylenoxid mit einem Ethylenoxidgehalt, bezogen auf die Gesamtmenge der enthaltenen Oxyalkylengruppen, von 50 bis 100 mol%, bevorzugt 60 bis 85 mol%, gestartet auf Polyolen oder Aminen. Geeignete Starter dieser Art sind Glycerin, Trimethylolpropan (TMP), Sorbit, Pentaerythrit, Triethanolamin, Ammoniak oder Ethylendiamin.

Die Polyalkylenoxide A2) besitzen typischerweise zahlenmittlere Molekulargewichte von 1000 bis 15000 g/mol, bevorzugt von 3000 bis 8500 g/mol.

Ferner können die Polyalkylenoxide A2) OH-Funktionalitäten von 2 bis 6, bevorzugt von 3 bis 6, besonders bevorzugt von 3 bis 4 aufweisen.

Gegebenenfalls einzusetzende Ring-Oligomere B) sind heterocyclische, 4-Ring- oder 6-Ring-Oligomere von niedermolekularen, aliphatischen Diisocyanaten mit einer Molmasse von 140 bis 278 g/mol wie Isocyanurate, Iminooxadiazindione oder Uretdione der vorgenannten niedermolekularen aliphatischen Diisocyanate. Bevorzugt sind heterocyclische 4-Ring-Oligomere wie Uretdione.

Der durch Einsatz der Ring-Oligomere B) erhöhte Gehalt an Isocyanatgruppen sorgt für ein besseres Aufschäumen durch mehr gebildetes $CO_2$ aus der Isocyanat-Wasser-Reaktion.

Das einzusetzende Wasser C) kann als solches, als Kristallwasser eines Salzes, als Lösung in einem dipolar-aprotischen Lösungsmittel oder auch als Emulsion eingesetzt werden. Bevorzugt wird das Wasser als solches oder in einem dipolar-aprotischen Lösungsmittel eingesetzt. Ganz besonders bevorzugt wird das Wasser als solches eingesetzt.

Zur Beschleunigung der Urethanbildung können Katalysatoren D) eingesetzt werden. Dabei handelt es sich typischerweise um die dem Fachmann aus der Polyurethantechnologie bekannten Verbindungen. Bevorzugt sind hier Verbindungen der Gruppe bestehend aus katalytisch aktiven Metallsalzen, Aminen, Amidinen und Guanidinen. Beispielhaft zu nennen sind Zinndibutyldilaurat (DBTL), Zinnoctoat (SO), Zinnacetat, Zinkoctoat (ZO), 1,8-Diazabi-cyclo[5.4.0]undecen-7 (DBU), 1,5-Diazabicyclo[4.3.0]nonen-5 (DBN), 1,4-Diazabicy-clo[3.3.0]octen-4 (DBO), N-Ethylmorpholin (NEM), Triethylendiamin (DABCO), Pentamethylguanidin (PMG), Tetrametylguanidin (TMG), Cyclotetramethylguanidin (TMGC), n-Decyl-tetramethylguanidin (TMGD), n-Dodecyltetramethylguanidin (TMGDO), Dimethylaminoethyltetramethylguanidin (TMGN), 1,1,4,4,5,5-Hexamethylisobiguanidin (HMIB), Phenyltetramethylguanidin (TMGP) und Hexamethylenoctamethylbiguanidin (HOBG).

Besonders bevorzugt ist der Einsatz von Aminen, Amidinen, Guanidinen oder deren Mischungen als Katalysatoren D). Ganz besonders bevorzugt wird 1,8-Diazabi-cyclo[5.4.0]undecen-7 (DBU) eingesetzt.

Als Ammonium- und Alkalisalze von $C_8$- bis $C_{22}$-Monocarboxylaten oder deren freien Carbonsäuren oder $C_{12}$- bis $C_{44}$-Dicarboxylaten oder deren freien Dicarbonsäuren E) können bevorzugt Kalium- oder Natriumsalze von $C_8$- bis $C_{22}$-Monocarboxylaten oder $C_{12}$- bis $C_{44}$-Dicarboxylaten und besonders bevorzugt Natriumsalze von $C_8$- bis $C_{22}$-Monocarboxylaten eingesetzt werden.

Beispielsweise geeignete Verbindungen E) sind die Ammonium-, Na-, Li- oder K-Salze von Ethylhexansäure, Octansäure, Decansäure, Dodecansäure, Palmitinsäure, Stearinsäure, den Octadecensäuren, den Octadecadiensäuren, den Octadecatriensäuren, Isostearinsäure, Erucasäure, Abietinsäure und ihren Hydrierungsprodukten. Beispiele für $C_{12}$- bis $C_{44}$-Dicarbonsäuren bzw. die daraus abgeleiteten Ammonium- und Alkalisalze sind Dodecandisäure, Dodecenyl-, Tetradecenyl-, Hexadecenyl- und Octadecenyl-Bernsteinsäure, $C_{36}$- und $C_{44}$-Dimerfettsäuren und ihre Hy-

drierungsprodukte sowie die entsprechenden Ammonium-, Na-, Li- oder K-Salze dieser Dicarbonsäuren.

Zur Verbesserung der Schaumbildung, Schaumstabilität oder der Eigenschaften des resultierenden Polyurethan-Schaums können Tenside F) eingesetzt werden, wobei solche Additive grundsätzlich alle an sich bekannten anionischen, kationischen, amphoteren und nichtionischen Tenside sowie Mischungen hieraus sein können. Bevorzugt werden Alkylpolyglycoside, EO/PO-Blockcopolymere, Alkyl- oder Arylalkoxylate, Siloxanalkoxylate, Ester der Sulfobernsteinsäure und/oder Alkali- oder Erdalkalimetallalkanoate eingesetzt. Besonders bevorzugt werden EO/PO-Blockcopolymere eingesetzt. Bevorzugt werden allein die EO/PO-Blockcopolymere als Tenside F) eingesetzt.

Zudem können zur Verbesserung der Schaumeigenschaften des resultierenden Polyurethan-Schaums ein- und mehrwertigen Alkohole G) sowie Mischungen hieraus eingesetzt werden.

Beispiele sind ein- oder mehrwertige Alkohole oder Polyole, wie Ethanol, Propanol, Butanol, Decanol, Tridecanol, Hexadecanol, Ethylenglykol, Neopentylglykol, Butandiol, Hexandiol, Decandiol, Trimethylolpropan, Glycerin, Pentaerythrit, monofunktionelle Polyetheralkohole und Polyesteralkohole, Polyetherdiole und Polyesterdiole.

Bei der Herstellung der hydrophilen Polyisocyanate H) wird das Verhältnis der monofunktionellen Polyalkylenoxide H2) zu den niedermolekularen, aliphatischen Diisocyanaten H1) typischerweise so eingestellt, dass auf 1 Mol OH-Gruppen der monofunktionellen Polyalkylenoxide 1,25 bis 15 Mol, bevorzugt 2 bis 10 Mol und besonders bevorzugt 2 bis 6 Mol NCO-Gruppen des niedermolekularen, aliphatischen Diisocyanats H1) kommen. Anschließend erfolgt die Allophanatisierung bzw. Biurethisierung und/oder Isocyanuratbildung bzw. Uretdionbildung. Werden die Polyalkylenoxide H2) über Urethangruppen an die aliphatischen Diisocyanate H1) gebunden, findet bevorzugt im Anschluss eine Allophanatisierung statt. Weiterhin ist bevorzugt, dass Isocyanurat-Struktureinheiten gebildet werden.

Eine alternative Herstellung der hydrophilen Polyisocyanate H) erfolgt typischerweise durch Umsetzung von 1 Mol OH-Gruppen der monofunktionellen Polyalkylenoxidkomponente H2) mit 1,25 bis 15 Mol, bevorzugt 2 bis 10 Mol und besonders bevorzugt 2 bis 6 Mol NCO-Gruppen eines Polyisocyanates H1) mit einer Isocyanatfunktionalität von 2 bis 6, dass auf aliphatischen Disocyanaten basiert. Beispielhaft für derartige Polyisocyanate H1) sind Biuret-Strukturen, Isocyanurate bzw. Uretdione basierend auf aliphatischen Diisocyanaten. Dabei werden die Polyisocyanate H1) und die Polyalkylenoxide H2) bevorzugt über eine Urethangruppe bzw. eine Harnstoffgruppe miteinander verknüpft, wobei besonders die Verknüpfung über Urethangruppen bevorzugt ist.

Die Umsetzung kann in Gegenwart von Urethanisierungskatalysatoren wie Zinnverbindungen, Zinkverbindungen, Aminen, Guanidinen oder Amidinen, oder in Gegenwart von Allophanatisierungskatalysatoren wie Zinkverbindungen erfolgen.

Die Umsetzung erfolgt typischerweise bei 25 bis 140 °C, bevorzugt 60 bis 100 °C.

Wurde mit überschüssigem niedermolekularen Diisocyanat gearbeitet, erfolgt anschließend die Entfernung des Überschusses an niedermolekularem, aliphatischen Diisocyanat bevorzugt durch Dünnschichtdestillation.

Vor, während und nach der Reaktion oder der destillativen Abtrennung des Diisocyanatüberschusses können saure oder alkylierende Stabilisatoren, wie Benzoylchlorid, Isophthaloylchlorid, Methyltosylat, Chlorpropionsäure, HCl oder Antioxidantien, wie Di-*tert*-butylkresol oder Tocopherol zugesetzt werden.

Der NCO-Gehalt (bestimmt nach DIN-EN ISO 11909) der hydrophilen Polyisocyanate H) beträgt bevorzugt 0,3 bis 20 Gew.-%, besonders bevorzugt 2 bis 10 Gew.-% und ganz besonders bevorzugt 3 bis 6 Gew.-%.

Beispiele für niedermolekulare, aliphatische Diisocyanate der Komponente H1) sind Hexamethylendiisocyanat (HDI), Isophorondiisocyanat (IPDI), Butylendiisocyanat (BDI), Bisisocyanatocyclohexylmethan (HMDI), 2,2,4-Trimethylhexamethylendiisocyanat, Bisisocyanatomethylcyclohexan, Bisisocyanatomethyltricyclodecan, Xylendiisocyanat, Tetramethylxylylendiisocyanat, Norbomandiisocyanat, Cyclohexandiisocyanat oder Diisocyanatododecan, wobei Hexamethylendiisocyanat (HDI), Isophorondiisocyanat (IPDI), Butylendiisocyanat (BDI) und Bis(isocyanatocyclohexyl)methan (HMDI) bevorzugt sind. Besonders bevorzugt sind Hexamethylendiisocyanat (HDI), Isophorondiisocyanat (IPDI), Butylendiisocyanat (BDI), ganz besonders bevorzugt Hexamethylendiisocyanat (HDI) und Isophorondiisocyanat (IPDI).

Beispiele für höhermolekulare Polyisocyanate H1) sind Polyisocyanate mit einer Isocyanatfunktionalität von 2 bis 6 mit Isocyanurat-, Urethan-, Allophanat-, Biuret-, Iminooxadiazintrion-, Oxadiazintrion- und/oder Uretdiongruppen auf Basis der im vorstehenden Abschnitt genannten aliphatischen und/oder cycloaliphatischen Diisocyanate.

Bevorzugt werden als Komponente H1) höhermolekulare Verbindungen mit Biuret-, Iminooxadiazindion,- Isocyanurat- und/oder Uretdiongruppen auf Basis von Hexamethylendiisocyanat, Isophorondiisocyanat und/oder 4,4'-Diisocyanatodicyclohexylmethan eingesetzt. Weiter bevorzugt sind Isocyanurate. Ganz besonders bevorzugt sind Strukturen auf Basis von Hexamethylendiisocyanat. Die Herstellung von Polyalkylenoxiden H2) durch Alkoxylierung geeigneter Startermoleküle ist literaturbekannt (z.B. Ullmanns Encyclopädie der technischen Chemie, 4. Auflage, Band 19, Verlag Chemie, Weinheim S. 31-38). Geeignete Startermoleküle sind insbesondere gesättigte Monoalkohole wie Methanol, Ethanol, n-Propanol, Isopropanol, n-Butanol, Isobutanol, sec-Butanol, Diethylenglykolmonobutylether sowie aromatische Alkohole wie Phenol oder Monoamine wie Diethylamin. Bevorzugte Startermoleküle sind gesättigte Monoalkohole der vorstehend genannten Art. Besonders bevorzugt werden Diethylenglykolmonobutylether oder n-Butanol als Startermoleküle verwendet.

Unter monofunktionellen Polyalkylenoxiden im Sinne der Erfindung sind Verbindungen zu verstehen, die nur eine isocyanatreaktive Gruppe, d.h. eine Gruppe, die mit einer NCO-Gruppe reagieren kann, aufweisen.

Die monofunktionellen Polyalkylenoxide H2) besitzen bevorzugt eine OH-Gruppe als isocyanatreaktive Gruppe.

Die monofunktionellen Polyalkylenoxiden H2) weisen eine OH-Zahl von 15 bis 250, bevorzugt von 28 bis 112, und einem Ethylenoxidanteil von 50 bis 100 mol%, bevorzugt von 60 bis 100 mol%, bezogen auf die Gesamtmenge der enthaltenen Oxyalkylengruppen auf.

Die monofunktionellen Polyalkylenoxide H2) besitzen typischerweise zahlenmittlere Molekulargewichte von 220 bis 3700 g/mol, bevorzugt von 500 bis 2800 g/mol.

Die Herstellung der erfindungsgemäßen hydrophilen, aliphatischen Polyurethan-Schäume kann durch Mischen der Komponenten A), B), C), E) und gegebenenfalls, D), F), G), H) in beliebiger Reihenfolge, Aufschäumen der Mischung und Aushärtung, bevorzugt durch chemische Vernetzung, erfolgen. Bevorzugt werden die Komponenten A), B) und ggf. H) miteinander vorvermischt. Die Komponenten E) und gegebenenfalls F) können in Form ihrer wässrigen Lösungen dem Reaktionsgemisch zugesetzt werden.

Das Aufschäumen kann dabei grundsätzlich durch das bei der Reaktion der Isocyanatgruppen mit Wasser gebildete Kohlendioxid erfolgen, die Verwendung von weiteren Treibmitteln ist jedoch ebenfalls möglich. So können prinzipiell auch Treibmittel aus der Klasse der Kohlenwasserstoffe wie $C_3$-$C_6$-Alkane, z.B. Butane, *n*-Pentan, iso-Pentan, *cyclo*-Pentan, Hexane o.ä. oder halogenierte Kohlenwasserstoffe wie Dichlormethan, Dichlormonofluormethan, Chlordifluorethane, 1,1-Dichlor-2,2,2-Trifluorethan, 2,2-Dichlor-2-fluorethan, insbesondere chlorfreie Fluorkohlenwasserstoffe wie Difluormethan, Trifluormethan, Difluorethan, 1,1,1,2-Tetrafluorethan, Tetrafluorethan (R 134 oder R 134a), 1,1,1,3,3-Pentafluorpropan (R 245 fa), 1,1,1,3,3,3-Hexafluorpropan (R 256), 1,1,1,3,3-Pentafluorbutan (R 365 mfc), Heptafluorpropan oder auch Schwefelhexafluorid verwendet werden. Auch Gemische dieser Treibmittel sind verwendbar.

Die anschließende Aushärtung erfolgt typischerweise bei Raumtemperatur.

Ein weiterer Gegenstand der vorliegenden Erfindung sind Zusammensetzungen umfassend

A) isocyanatfunktionelle Präpolymere mit einem Gewichtsanteil an niedermolekularen, aliphatischen Diisocyanaten mit einer Molmasse von 140 bis 278 g/mol von unter 1,0 Gew.-%, bezogen auf das Präpolymer, erhältlich durch Umsetzung von
A1) niedermolekularen, aliphatischen Diisocyanaten einer Molmasse von 140 bis 278 g/mol mit
A2) di- bis hexafunktionellen, bevorzugt tri- bis hexafunktionellen Polyalkylenoxiden einer OH-Zahl von 22,5 bis 112, bevorzugt von 31,5 bis 56, und einem Ethylenoxidanteil von 50 bis 100 mol%, bevorzugt 60 bis 85 mol%, bezogen auf die Gesamtmenge der enthaltenen Oxyalkylengruppen,

B) heterocyclische, 4-Ring- oder 6-Ring-Oligomere von niedermolekularen, aliphatischen Diisocyanaten mit einer Molmasse von 140 bis 278 g/mol,

C) Wasser,

D) gegebenenfalls Katalysatoren,

E) $C_8$- bis $C_{22}$-Monocarbonsäuren oder deren Ammonium- oder Alkalisalze oder $C_{12}$- bis $C_{44}$-Dicarbonsäuren oder deren Ammonium- oder Alkalisalze,

F) gegebenenfalls Tenside,

G) gegebenenfalls ein- oder mehrwertige Alkohole und

H) gegebenenfalls hydrophile Polyisocyanate erhältlich durch Umsetzung von
H1) niedermolekularen, aliphatischen Diisocyanaten einer Molmasse von 140 bis 278 g/mol und / oder daraus herstellbaren Polyisocyanaten mit einer Isocyanatfunktionalität von 2 bis 6 mit
H2) monofunktionellen Polyalkylenoxiden einer OH-Zahl von 10 bis 250, und einem Ethylenoxidanteil von 50 bis 100 mol%, bezogen auf die Gesamtmenge der enthaltenen Oxyalkylengruppen. dadurch gekennzeichnet, dass die Komponenten A) bis H) in folgenden Mengen in den Zusammensetzungen enthalten sind:

A) 100 Gewichtsteile isocyanatfunktionelle r Präpolymere

B) > 30 bis 100 Gewichtsteile heterocyclischer Oligomere

C) 0,1 bis 200 Gewichtsteile Wasser

D) 0 bis 1 Gewichtsteile Katalysatoren

E) 0,01 bis 5 Gewichtsteile $C_8$- bis $C_{12}$-Monocarbonsäuren oder deren Ammonium- oder Alkalisalze oder $C_{12}$- bis $C_{44}$-Dicarbonsäuren oder deren Ammonium- oder Alkalisalze

F) 0 bis 10 Gewichtsteile Tenside

G) 0 bis 20 Gewichtsteile Alkohole

H) 0 bis 60 Gewichtsteile hydrophilen Polyisocyanate.

Vorzugsweise enthalten die Zusammensetzungen 35 bis 100, bevorzugt 40 bis 90, weiter bevorzugt 45 bis 80, besonders bevorzugt 50 bis 80 und ganz besonders bevorzugt 50 bis 70 Gewichtsteile heterocyclische Oligomere B).

Gegenstand der vorliegenden Erfindung sind überdies die nach dem erfindungsgemäßen Verfahren erhältlichen Polyurethan-Schäume, sowie die Verwendung der hydrophilen, aliphatischen Polyurethan-Schäume als Weichschaum, als Bestandteil einer Wundauflage, eines kosmetischen Artikels oder eines Inkontinenzprodukts.

Gegenständ der Erfindung ist insbesondere auch die Verwendung der erfindungsgemäßen Polyurethanschäume zur Herstellung von Wundauflagen zur Behandlung von Wunden.

Ebenfalls Gegenstand der Erfindung sind erfindungsgemäße Polyurethanschäume als Mittel zur Behandlung von Wunden.

Nach der Herstellung können die Polyurethan-Schäume nach an sich bekannten Verfahren zu flächigen Materialien verarbeitet werden, welche dann beispielsweise als Bestandteil einer Wundauflage, eines kosmetischen Artikels oder eines Inkontinenzprodukts eingesetzt werden. In der Regel werden dazu Blockschäume auf die gewünschte Dicke nach gängigen Methoden geschnitten und flächige Materialien mit einer Dicke von typischerweise 10 $\mu$ bis 5 cm, bevorzugt 0,1 mm bis 1 cm, besonders bevorzugt 0,1 mm bis 6 mm, ganz besonders bevorzugt 0,2 mm bis 6 mm zu erhalten.

Durch geeignete Gießtechniken können die beschriebenen flächigen Materialien aber auch direkt durch Auftrag und Aufschäumen der erfindungsgemäßen Zusammensetzung auf ein Substrat, z.B. ein gegebenenfalls vorbehandeltes Papier oder Textil, erhalten werden. Daneben kann beispielsweise ein Aufbringen durch Rakel in Betracht kommen durch alle bekannten Typen wie beispielsweise Luftrakel, Walzenrakel, Streichrakel, Kastenrakel, Messerrakel oder Magnetrakel.

Die Polyurethan-Schäume können überdies mit weiteren Materialien verklebt, laminiert oder beschichtet werden, beispielsweise auf Basis von Hydrogelen, (semi-) permeablen Folien, Schaumfolien, Beschichtungen, Hydrokolloiden oder anderen Schäumen.

Die erfindungsgemäßen Polyurethan-Schäume sind besonders geeignet zur Herstellung von Wundauflagen. Dabei können die Polyurethan-Schäume in direktem oder indirektem Kontakt mit der Wunde sein. Bevorzugt werden die Polyurethan-Schäume jedoch in direktem Kontakt mit der Wunde eingesetzt, um beispielsweise eine optimale Absorption von Wundflüssigkeit zu gewährleisten. Die Polyurethan-Schäume zeigen keine Zelltoxizität (Bestimmung nach ISO 10993-5 und ISO 10993-12).

Die Polyurethan-Schäume, welche als Wundauflage eingesetzt werden, können zusätzlich noch in einem weiteren Verfahrensschritt sterilisiert werden. Zur Sterilisation kommen die dem Fachmann an sich bekannten Verfahren zum Einsatz, bei denen eine Sterilisation durch thermische Behandlung, chemische Stoffe wie Ethylenoxid oder Bestrahlung beispielsweise durch Gammabestrahlung erfolgt. Die Bestrahlung kann dabei gegebenenfalls unter Schutzgasatmosphäre erfolgen. Die erfindungsgemäßen Polyurethan-Schäume haben dabei den großen Vorteil, dass sie sich bei Bestrahlung, insbesondere bei Bestrahlung mit Gammastrahlen, nicht verfärben.

Ebenfalls möglich ist die Zugabe, Einarbeitung oder Beschichtung von bzw. mit antimikrobiellen oder biologischen Wirkstoffen, welche sich beispielsweise in Bezug auf die Wundheilung und die Vermeidung von Keimbelastungen positiv auswirken.

## Beispiele

Die Erfindung wir im Folgenden anhand von Beispielen näher erläutert.

## Verwendete Substanzen und Abkürzungen:

| | |
|---|---|
| Carboxylat 1: | 10 % Natriumoleat in Wasser |

(fortgesetzt)

| | |
|---|---|
| Desmodur® N 3400: | Aliphatisches Polyisocyanat (HDI-Uretdion), NCO-Gehalt 21,8 % |
| Desmodur® N 3300: | Aliphatisches Polyisocyanat (HDI-Isocyanurat), NCO-Gehalt 21,8 %, Bayer MaterialScience AG, Leverkusen, Deutschland |
| Polyether LB 25: | monofunktioneller Polyether auf Ethylenoxid-/Propylenoxidbasis, zahlenmittleres Molekulargewicht 2250 g/mol, OH-Zahl 25 mg KOH/g (Bayer MaterialScience AG, Leverkusen, DE) |

**Methoden:**

Sofern nicht abweichend gekennzeichnet, beziehen sich alle Prozentangaben auf das Gewicht. Die Bestimmung der Festkörpergehalte erfolgte nach DIN-EN ISO 3251. Die Bestimmung der Viskositäten erfolgte bei 23 °C und wurde nach DIN 53019 durchgeführt. Die NCO-Gehalte wurden volumetrisch gemäß DIN-EN ISO 11909 bestimmt.

Als Rakel wurde der Zehntner Universalapplikator ZUA 2000 mit einer Filmbreite von 200 mm und einer einstellbaren Spalthöhe von 0 bis 3 mm eingesetzt (Fa. Zehntner GmbH, Sissach, Schweiz).

Zur Bestimmung des Absorptionsvermögens der Schäume von physiologischer Salzlösung wurde die Masse der vom Schaum aufgenommenen Flüssigkeit bezogen auf die Masse des trockenen Schaums bestimmt (Bestimmung nach DIN EN 13726-1, Teil 3.2).

Die Volumenquellung wurde bestimmt, indem ein flächiges Stück eines trockenen Polyurethan-Schaums mit einer Breite von 5 cm, einer Länge von 5 cm und einer Dicke zwischen 2-10 mm eine halbe Stunde in Leitungswasser getaucht und anschließend das Volumen des nassen Schaums bestimmt wurde, indem Breite, Länge und Dicke des Schaums gemessen wurden und aus diesen Werten das Volumen des nassen Schaums errechnet wurde. Die prozentuale Volumenquellung wurde dann nach folgender Formel bestimmt:

$$\text{Volumenquellung} = \text{Volumen des nassen Schaums} / \text{Volumen des trockenen Schaums} * 100$$

**Beispiel 1: Herstellung des Polyurethan-Präpolymers 1 (Baustein A)**

Zu einem Gemisch aus 1000 g HDI und 1g Benzoylchlorid wurde bei 80 °C innerhalb von 3 h 1000 g eines Polyalkylenoxids mit einer Molmasse von 4680 g/mol, gestartet auf Glycerin, einem Ethylenoxidgewichtsanteil von 72 % und einen Propylenoxidgewichtsanteil von 28 %, das zuvor bei 100 °C während 6 h bei einem Druck von 0,1 mbar getrocknet wurde, zugetropft und für 12 h nachgerührt. Das überschüssige HDI wurde durch Dünnschichtdestillation bei 130 °C und 0,1 mbar entfernt, wobei die nicht flüchtigen Bestandteile mit 1 g Chlorpropionsäure stabilisiert wurden. Man erhielt ein Präpolymer mit einem NCO-Gehalt von 2,77 % und einer Viskosität von 3500 mPas.

**Beispiel 2 : Herstellung_ eines hydrophilen Polyisocyanates (Baustein H)**

Ein Gemisch aus 282,5 g Desmodur N 3300 und 843,8 g eines Mono-Hydroxy-funktionellen Polyethers auf Ethylenoxid-/Propylenoxidbasis (mit einem Ethylenoxid-Anteil von 80 mol bezogen auf die Gesamtmenge der enthaltenen Oxyalkylengruppen), zahlenmittleres Molekulargewicht 2250 g/mol (OH-Zahl 25 mg KOH/g) wurde in einer Glasapparatur so lang bei 80 °C gerührt, bis der tritrimetrisch ermittelte Gehalt an NCO-Gruppen konstant war. Man erhielt eine Flüssigkeit mit einem NCO-Gehalt von 4,04 % und einer Viskosität von 3330 mPas.

**Herstellung von Schaumstoffen**

Die beiden Isocyanat-Komponenten der Bespiele 1 und 2 und das Oligomer B wurden 15 Sekunden mit einer Rührerdrehzahl von 1200 Upm homogenisiert, dann die weiteren Komponenten gemäß Tabelle 1 eingewogen, weitere 10 Sekunden verrührt und mit einem Rakel (Spalthöhe 1,5 mm) auf silikonisiertes Trennpapier aufgebracht. Als Oligomer wurde, falls verwendet, dabei jeweils Desmodur® N 3400 eingesetzt; als Carboxylat eine 5%ige Lösung von Natriumoleat in Wasser. Darüber hinaus zugesetztes Wasser wird extra angegeben.

Tabelle 1

| Komponente [g] | Schaumbeispiele | | | | | | | | |
|---|---|---|---|---|---|---|---|---|---|
| | 1* | 2* | 3 | 4 | 5 | 6 | 7 | | |
| Präpolymer A) aus Beispiel 1 | 75 | 65 | 75 | 75 | 75 | 65 | 45 | | |
| Oligomer B) | 8,33 | 8,33 | 37,5 | 75 | 26,25 | 37,5 | 37,5 | | |
| Wasser C) | 3,35 | 3,5 | 3,5 | 3,5 | 3,5 | 3,5 | 3,5 | | |
| Hydrophiles Polyisocyanat H) aus Beispiel 2 | 0 | 10 | 0 | 0 | 0 | 10 | 30 | | |
| Natrium-Oleat E) als 5 Gew.-%ige Lösung in Wasser | 8,30 | 8,30 | 8,2 | 8,2 | 8,2 | 8,3 | 8,3 | | |
| Rohdichte [g/1000 $cm^3$] | 174 | 160 | 98 | 114 | 126 | 149 | 89 | | |
| Schaumdicke [mm] | 3,8 | 6,1 | 9,6 | 9,7 | 8,1 | 7,9 | 12,9 | | |
| Absorption (%) | 605 | 1265 | 895 | 594 | 659 | 1150 | 1436 | | |
| Volumen Quellung (%) | 124 | 172 | 99,5 | 98 | 81 | 81 | 98 | | |
| Oligomer (falls vorhanden): Desmodur N 3400; * Vergleichsbeispiele | | | | | | | | | |

Beispiele 3-7 sind Polyurethan-Schäume mit einem hohen Absorptionsvermögen und einer gegenüber den Vergleichsbeispielen 1 und 2 reduzierten Dichte und Volumenquellung.

## Patentansprüche

1. Verfahren zur Herstellung hydrophiler, aliphatischer Polyurethan-Schäume, bei dem Zusammensetzungen umfassend

   A) isocyanatfunktionelle Präpolymere mit einem Gewichtsanteil an niedermolekularen, aliphatischen Diisocyanaten mit einer Molmasse von 140 bis 278 g/mol von unter 1,0 Gew.-%, bezogen auf das Präpolymer, erhältlich durch Umsetzung von
   A1) niedermolekularen, aliphatischen Diisocyanaten einer Molmasse von 140
   bis 278 g/mol mit
   A2) di- bis hexafunktionellen Polyalkylenoxiden einer OH-Zahl von 22,5 bis 112 mg KOH/g, und einem Ethylenoxidanteil von 50 bis 100 mol% bezogen auf die Gesamtmenge der enthaltenen Oxyalkylengruppen,
   B) heterocyclische, 4-Ring- oder 6-Ring-Oligomere von niedermolekularen, aliphatischen Diisocyanaten mit einer Molmasse von 140 bis 278 g/mol,
   C) Wasser,
   D) gegebenenfalls Katalysatoren,
   E) $C_8$- bis $C_{22}$-Monocarbonsäuren oder deren Ammonium- oder Alkalisalze oder $C_{12}$- bis $C_{44}$-Dicarbonsäuren oder deren Ammonium- oder Alkalisalze,
   F) gegebenenfalls Tenside,
   G) gegebenenfalls ein- oder mehrwertige Alkohole und
   H) gegebenenfalls hydrophile Polyisocyanate erhältlich durch Umsetzung von
   H1) niedermolekularen, aliphatischen Diisocyanaten einer Molmasse von 140
   bis 278 g/mol und / oder daraus herstellbaren Polyisocyanaten mit einer Isocyanatfunktionalität von 2 bis 6 mit
   H2) monofunktionellen Polyalkylenoxiden einer OH-Zahl von 10 bis 250 und
   einem Ethylenoxidanteil von 50 bis 100 mol%, bezogen auf die Gesamtmenge der enthaltenen Oxyalkylengruppen,
   bereitgestellt, aufgeschäumt und ausgehärtet werden,
   **dadurch gekennzeichnet, dass** die Komponenten A) bis H) in folgenden Mengen eingesetzt werden:
   A) 100 Gewichtsteile isocyanatfunktioneller Präpolymere
   B) >30 bis 100 Gewichtsteile heterocyclischer Oligomere
   C) 0,1 bis 200 Gewichtsteile Wasser
   D) 0 bis 1 Gewichtsteile Katalysatoren

E) 0,01 bis 5 Gewichtsteile $C_8$- bis $C_{12}$-Monocarbonsäuren oder deren Ammonium- oder Alkalisalze oder $C_{12}$- bis $C_{44}$-Dicarbonsäuren oder deren Ammonium- oder Alkalisalze
F) 0 bis 10 Gewichtsteile Tenside
G) 0 bis 20 Gewichtsteile Alkohole
H) 0 bis 60 Gewichtsteile hydrophile Polyisocyanate.

**2.** Verfahren gemäß Anspruch 1, **dadurch gekennzeichnet, dass** 35 bis 100, bevorzugt 40 bis 90, weiter bevorzugt 45 bis 80, besonders bevorzugt 50 bis 80 und ganz besonders bevorzugt 50 bis 70 Gewichtsteile heterocyclische Oligomere B) eingesetzt werden.

**3.** Verfahren gemäß einem der Ansprüche 1 oder 2, **dadurch gekennzeichnet, dass** der NCO-Gehalt der isocyanatfunktionellen Präpolymere A) 1,5 bis 3,0 Gew.-% beträgt.

**4.** Verfahren gemäß einem der Ansprüche 1 bis 3, **dadurch gekennzeichnet, dass** als niedermolekulare, aliphatische Diisocyanate A1) ausschließlich Hexamethylendiisocyanat (HDI), Isophorondiisocyanat (IPDI) oder deren Mischungen untereinander eingesetzt werden.

**5.** Verfahren gemäß einem der Ansprüche 1 bis 4, **dadurch gekennzeichnet, dass** als Polyalkylenoxide A2) Copolymere aus Ethylenoxid und Propylenoxid mit einem Ethylenoxidgehalt, bezogen auf die Gesamtmenge der enthaltenen Oxyalkylengruppen, von 60 bis 85 mol%, gestartet auf Polyolen oder Aminen eingesetzt werden.

**6.** Verfahren gemäß einem der Ansprüche 1 bis 5, **dadurch gekennzeichnet, dass** die Polyalkylenoxide A2) zahlenmittlere Molekulargewichte von 3000 bis 8500 g/mol aufweisen.

**7.** Verfahren gemäß einem der Ansprüche 1 bis 6, **dadurch gekennzeichnet, dass** die Polyalkylenoxide A2) OH-Funktionalitäten von 3 bis 4 aufweisen.

**8.** Verfahren gemäß einem der Ansprüche 1 bis 7, **dadurch gekennzeichnet, dass** als heterocyclische Oligomere B) heterocyclische 4-Ring-Oligomere eingesetzt werden.

**9.** Verfahren gemäß einem der Ansprüche 1 bis 8, **dadurch gekennzeichnet, dass** als Katalysatoren D) Metallsalze, Amine, Amidine und Guanidine eingesetzt werden.

**10.** Zusammensetzungen umfassend

A) isocyanatfunktionelle Präpolymere mit einem Gewichtsanteil an niedermolekularen, aliphatischen Diisocyanaten mit einer Molmasse von 140 bis 278 g/mol von unter 1,0 Gew.-%, bezogen auf das Präpolymer, erhältlich durch Umsetzung von
A1) niedermolekularen, aliphatischen Diisocyanaten einer Molmasse von 140
bis 278 g/mol mit
A2) di- bis hexafunktionellen, bevorzugt tri- bis hexafunktionellen Polyalkylenoxiden einer OH-Zahl von 22,5 bis 112, bevorzugt von 31,5 bis 56, und einem Ethylenoxidanteil von 50 bis 100 mol%, bevorzugt 60 bis 85 mol%, bezogen auf die Gesamtmenge der enthaltenen Oxyalkylengruppen,
B) heterocyclische, 4-Ring- oder 6-Ring-Oligomere von niedermolekularen, aliphatischen Diisocyanaten mit einer Molmasse von 140 bis 278 g/mol,
C) Wasser,
D) gegebenenfalls Katalysatoren,
E) $C_8$- bis $C_{22}$-Monocarbonsäuren oder deren Ammonium- oder Alkalisalze oder $C_{12}$- bis $C_{44}$-Dicarbonsäuren oder deren Ammonium- oder Alkalisalze,
F) gegebenenfalls Tenside,
G) gegebenenfalls ein- oder mehrwertige Alkohole und
H) gegebenenfalls hydrophile Polyisocyanate erhältlich durch Umsetzung von
H1) niedermolekularen, aliphatischen Diisocyanaten einer Molmasse von 140
bis 278 g/mol und / oder daraus herstellbaren Polyisocyanaten mit einer Isocyanatfunktionalität von 2 bis 6 mit
H2) monofunktionellen Polyalkylenoxiden einer OH-Zahl von 10 bis 250 und
einem Ethylenoxidanteil von 50 bis 100 mol%, bezogen auf die Gesamtmenge der enthaltenen Oxyalkylengruppen.
**dadurch gekennzeichnet, dass** die Komponenten A) bis H) in folgenden Mengen in den Zusammensetzungen enthalten sind:
A) 100 Gewichtsteile isocyanatfunktioneller Präpolymere
B) > 30 bis 100 Gewichtsteile heterocyclischer Oligomere
C) 0,1 bis 200 Gewichtsteile Wasser
D) 0 bis 1 Gewichtsteile Katalysatoren
E) 0,01 bis 5 Gewichtsteile $C_8$- bis $C_{12}$-Monocarbonsäuren oder deren Ammonium- oder Alkalisalze oder $C_{12}$- bis $C_{44}$-Dicarbonsäuren oder deren Ammonium- oder Alkalisalze
F) 0 bis 10 Gewichtsteile Tenside
G) 0 bis 20 Gewichtsteile Alkohole
H) 0 bis 60 Gewichtsteile hydrophile Polyisocyanate.

**11.** Zusammensetzungen gemäß Anspruch 10, **dadurch gekennzeichnet, dass** sie 35 bis 100, bevorzugt 40 bis 90, weiter bevorzugt 45 bis 80, besonders bevorzugt 50 bis 80 und ganz besonders bevorzugt 50 bis 70 Gewichtsteile heterocyclische Oligomere B) enthalten.

**12.** Polyurethanschäume erhältlich nach einem Verfahren gemäß einem der Ansprüche 1 bis 9 oder aus Zusammensetzungen gemäß Anspruch 10 oder 11.

**13.** Wundauflagen, kosmetische Artikel oder Inkontinenzprodukte erhältlich unter Verwendung von Polyurethanschäumen gemäß Anspruch 12.

**14.** Verwendung von Polyurethanschäumen gemäß Anspruch 12 zur Herstellung von Wundauflagen zur Behandlung von Wunden.

**15.** Polyurethanschäume nach Anspruch 12 als Mittel zur Behandlung von Wunden.

Europäisches
Patentamt
European
Patent Office
Office européen
des brevets

# EUROPÄISCHER RECHERCHENBERICHT

Nummer der Anmeldung
EP 09 01 5400

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2007 048079 A1 (BAYER MATERIALSCIENCE AG [DE]; BAYER INNOVATION GMBH [DE]) 9. April 2009 (2009-04-09)<br>* Absätze [0006], [0010], [0016], [0022], [0083], [0084] *<br>* Beispiel 1 *<br>* Anspruch 1 *<br>----- | 1-15 | INV.<br>C08G18/10<br>C08G18/28<br>C08J9/00<br>C08K5/09<br>C08K5/098 |
| A | US 5 296 518 A (GRASEL TIMOTHY G [US] ET AL) 22. März 1994 (1994-03-22)<br>* Spalte 2, Zeile 62 - Spalte 3, Zeile 5 *<br>* Beispiele I,III,VI *<br>----- | 1-15 | |

RECHERCHIERTE SACHGEBIETE (IPC)
C08G
C08J
C08K

Der vorliegende Recherchenbericht wurde für alle Patentansprüche erstellt

1

| Recherchenort | Abschlußdatum der Recherche | Prüfer |
|---|---|---|
| Den Haag | 1. April 2010 | Bezard, Stéphane |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 09 01 5400

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-04-2010

| Im Recherchenbericht angeführtes Patentdokument | Datum der Veröffentlichung | Mitglied(er) der Patentfamilie | Datum der Veröffentlichung |
|---|---|---|---|
| DE 102007048079 A1 | 09-04-2009 | WO 2009043497 A1 | 09-04-2009 |
| | | US 2009214651 A1 | 27-08-2009 |
| US 5296518 A | 22-03-1994 | US 5270044 A | 14-12-1993 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 949285 A
- GB 1571730 A
- WO 2004013215 A
- US 3778390 A
- US 3799898 A
- FR 2077388
- WO 2003097727 A
- US 5065752 A
- US 5064653 A
- US 3903232 A
- US 5296518 A
- EP 2009004610 W


### In der Beschreibung aufgeführte Nicht-Patentliteratur


- Ullmanns Encyclopädie der technischen Chemie. Verlag Chemie, vol. 19, 31-38